# FASCICULE DE BREVET EUROPEEN

(11) **EP 4 281 267 B1**
(45) Date de publication et mention de la délivrance du brevet: **16.04.2025**
(21) Numéro de dépôt: 22705416.0
(22) Date de dépôt: 14.01.2022
(51) Int. Cl.: B29B 11/16, B29D 99/00, B29C 70/22, B29C 70/32, B29C 70/46, B29C 70/48, B29C 70/54, B29L 31/08, F01D 5/28

(54) **PROCEDE DE FABRICATION D'UNE PREFORME POUR UNE PIECE DE TURBOMACHINE ET INSTALLATION DE TISSAGE D'UNE TELLE PREFORME**
VERFAHREN ZUR HERSTELLUNG EINER VORFORM FÜR EINE TURBOMASCHINENKOMPONENTE UND ANLAGE ZUM WEBEN SOLCH EINER VORFORM
METHOD FOR MANUFACTURING A PREFORM FOR A TURBOMACHINE COMPONENT AND INSTALLATION FOR WEAVING SUCH A PREFORM

(30) Priorité: 19.01.2021 FR 2100489
(43) Date de publication de la demande: 29.11.2023
(73) Titulaire: Safran Aircraft Engines, 75015 Paris (FR)
(72) Inventeur: FABRE, Hubert Jean Marie, 77550 Moissy-Cramayel (FR); JAUSSAUD, Raoul, 77550 Moissy-Cramayel (FR)
(74) Mandataire: Gevers & Orès
(86) Numéro de dépôt international: PCT/FR2022/050082
(87) Numéro de publication internationale: WO 2022/157445

(56) Documents cités:
- WO-A1-2017/149252
- FR-A1- 3 066 429
- FR-A1- 3 085 126

## Description

### Domaine de l'invention

La présente invention concerne le domaine de la fabrication de pièce de turbomachine en matériau composite à partir d'une préforme. Elle vise également une installation de tissage pour la fabrication d'une telle préforme.

### Arrière-plan technique

Il est connu de réaliser diverses pièces de turbomachine, en particulier de turbomachine d'aéronef, dans un matériau composite dans le but d'améliorer leurs capacités de résistances thermomécaniques et de réduire leurs masses. Le matériau composite est réalisé à partir d'une préforme ou tissu destiné(e) à former un renfort fibreux et qui est noyé(e) dans une matrice. La préforme est obtenue par un tissage tridimensionnel (ou tissage 3D) ou bidimensionnel (ou tissage 2D).

De manière générale, le tissage de la préforme est réalisé à partir d'une installation de tissage avec un métier à tisser de type Jacquard. L'installation de tissage est alimentée de plusieurs fils de trame et de chaine qui sont amenés à s'entrecroiser ou s'entrelacer suivant une armure prédéterminée pour former la préforme. La nature des fils de trame et de chaîne ainsi que l'armature sélectionnée permettra de définir les propriétés mécaniques de la préforme et aussi de la pièce de la turbomachine. L'installation comprend à cet effet un peigne à tisser qui se trouve dans une zone de tissage où en sortie de celle-ci est obtenue la préforme (où les fils sont tissées). La préforme (ainsi tissée) est enroulée et stockée sur un rouleau de stockage connu sous l'expression anglaise « take-up » et qui est agencé en aval du peigne à tisser. Le rouleau de stockage est entraîné en rotation autour d'un axe de rotation à l'aide d'une motorisation de manière à tirer la préforme tout en lui appliquant une tension suivant l'installation. Afin de permettre de faciliter le tirage et l'acheminement de la préforme vers le rouleau de stockage, un premier rouleau d'appel connu sous l'expression anglaise « puller » est monté juste en sortie de la zone de tissage et en amont du rouleau de stockage. Des exemples d'installation de tissage sont décrits dans les documents FR-A 13066429 et WO-A1-2017/149252.

Lors du tissage de la préforme, il arrive que la préforme glisse sur le premier rouleau d'appel ce qui engendre un espacement (ou relâchement) ou un resserrement (ou contraction) des mailles, notamment des mailles de trame (connu sous l'expression « pick spacing » en anglais). Cette anomalie intervient également et presqu'exclusivement lors de l'arrêt de l'installation à tisser qui peut survenir pour la maintenance de l'installation, lors d'un incident pendant le fonctionnement de l'installation, ou d'un réapprovisionnement de fils, etc. Les préformes réalisées avec un textile non tissé tel que dans le document FR-A1-3085126 ne rencontrent pas de problèmes de pick spacing. A l'arrêt, il a été constaté une baisse de tension au niveau du rouleau de stockage qui se répercute sur le premier rouleau d'appel ce qui entraîne le relâchement ou le resserrement des mailles.

### Résumé de l'invention

L'objectif de la présente invention est de fournir une solution permettant de fiabiliser la tension tout au long du processus de tissage tout en étant économique et simple.

Nous parvenons à cet objectif conformément à l'invention grâce à un procédé de fabrication d'une préforme d'une pièce de turbomachine avec une installation de tissage comprenant au moins un premier rouleau d'appel et un rouleau de stockage, le procédé comprenant les étapes suivantes :
- alimentation de l'installation à tisser avec des fils de trame et de chaîne,
- tissage des fils de trame et de chaîne de manière à former une préforme,
- entraînement de la préforme suivant un sens de déplacement vers le rouleau de stockage qui applique une tension prédéterminée sur la préforme, et
- enroulement et stockage de la préforme autour du rouleau de stockage,
le procédé comprenant une étape d'immobilisation de la préforme sur le premier rouleau d'appel disposé en amont du rouleau de stockage suivant le sens de déplacement de la préforme.

Ainsi, cette solution permet d'atteindre l'objectif susmentionné. En particulier, l'immobilisation de la préforme, qui sort du métier à tisser, sur le premier rouleau d'appel évite le glissement de la préforme vers le peigne (situé en amont du premier rouleau d'appel) ou vers le rouleau de stockage qui applique une tension sur la préforme. Les mailles de la préforme (entre les fils de trame et de chaine), notamment les mailles de trame (« spick spacing ») sont contrôlées et uniformes ; elles ne sont plus trop resserrées ou trop espacées (notamment en cas de relâchement de la tension d'un des deux côtés de la préforme) et les éventuelles faiblesses mécaniques une fois la pièce en matériau composite à partir de cette préforme obtenue sont évitées.

Le procédé comprend également l'une ou plusieurs des étapes et/ou caractéristiques suivantes, prises seules ou en combinaison :
- l'étape d'immobilisation est réalisée au moyen d'une bride agencée à proximité du premier rouleau d'appel.
- la bride est amovible.
- la bride se déplace vers le premier rouleau d'appel de sorte que la préforme soit compressée entre le premier rouleau d'appel et la bride.
- la bride se déplace sensiblement suivant une direction orthogonale au sens de déplacement de la préforme.
- le déplacement d'au moins la partie mobile de la bride est manuel.
- le déplacement d'au moins la partie mobile de la bride est motorisé.
- l'installation est reliée à un système électronique de commande configurée pour commander l'arrêt et la mise en marche de l'installation, le système électronique de commande étant relié à un organe de mise en déplacement de la bride de sorte que lorsqu'il reçoit une information d'arrêt de l'installation, un ordre de commande est envoyé à l'organe de mise en déplacement.
- la bride applique une pression sur le premier rouleau d'appel comprise entre 0.1 et 2 Mpa.
- la préforme est réalisée suivant un tissage interlock tridimensionnel, un tissage tridimensionnel, ou un tissage bidimensionnel.

L'invention concerne également une installation de tissage pour la fabrication d'une préforme d'une pièce de turbomachine, l'installation comprenant :
- une structure fixe,
- au moins un rouleau de stockage de la préforme monté en rotation autour d'un premier axe de rotation par rapport à la structure, le rouleau de stockage étant destiné à appliquer une tension sur la préforme qui est destinée à être entraînée suivant un sens de déplacement vers le rouleau de stockage et à s'enrouler autour de celui-ci,
- au moins un premier rouleau d'appel monté en amont du rouleau de stockage et mobile en rotation autour d'un deuxième axe de rotation par rapport à la structure, et
- une bride configurée de manière à immobiliser la préforme sur le premier rouleau d'appel lors de l'arrêt de l'installation.

L'installation comprend également l'une ou plusieurs des caractéristiques suivantes, prises seules ou en combinaison :
- la bride est fixée de manière amovible sur la structure fixe.
- au moins une partie de la bride est mobile par rapport au premier rouleau d'appel via au moins un organe de mise en déplacement qui est fixé sur la structure et relié à la bride.
- la bride comprend une surface d'appui orientée vers le premier rouleau et qui présente une forme complémentaire avec une surface périphérique du premier rouleau ou de la préforme.
- la bride comprend un organe de support et un organe mobile ou un organe souple par rapport à l'organe de support, l'organe souple ou mobile portant la surface d'appui.
- la surface d'appui comprend un revêtement réalisé dans un matériau polymère.
- le premier rouleau d'appel est destiné à entraîner la préforme suivant une vitesse prédéterminée.

L'invention concerne également un procédé de fabrication d'une pièce de turbomachine en matériau composite comprenant un renfort fibreux densifié par une matrice, le procédé comprenant les étapes suivante :
- fabrication d'une préforme tel que susmentionnée,
- mise en place de la préforme autour d'un mandrin formant un moule,
- installation d'un contre moule autour de la préforme mise en place sur le mandrin de manière à former une chambre d'injection,
- injection d'une matrice dans la chambre d'injection,
- polymérisation de la matrice,
- démoulage de la pièce en matériau composite.

L'invention concerne également un carter de turbomachine en matériau composite comprenant un renfort fibreux densifié par une matrice, le carter étant réalisé par le procédé présentant l'une quelconque des étapes et/ou caractéristiques ci-dessus.

L'invention concerne par ailleurs une turbomachine comprenant au moins un carter en matériau composite tel que précité.

L'invention concerne également un aéronef comprenant au moins une turbomachine telle que susmentionnée.

### Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :
[Fig. 1] La figure 1 est une vue en coupe axiale et partielle d'un exemple de turbomachine à laquelle s'applique l'invention ;
[Fig. 2] La figure 2 est une vue très schématique d'une installation de tissage pour la fabrication d'une préforme selon l'invention ;
[Fig. 3] La figure 3 est une vue schématique et en coupe axiale d'une autre partie de l'installation de tissage qui comprend au moins un rouleau de stockage de la préforme obtenue en sortie d'un métier à tisser selon l'invention;
[Fig. 4] La figure 4 est une vue schématique et de détails d'un premier rouleau d'appel de l'installation de tissage coopérant avec une bride qui est destinée à immobiliser la préforme en cas d'arrêt de l'installation de tissage selon l'invention ; et
[Fig. 5] La figure 5 est une vue schématique et de détails d'un autre mode de réalisation d'un premier rouleau d'appel de l'installation de tissage équipée d'une bride destinée à immobiliser la préforme en cas d'arrêt de l'installation de tissage selon l'invention.

### Description détaillée de l'invention

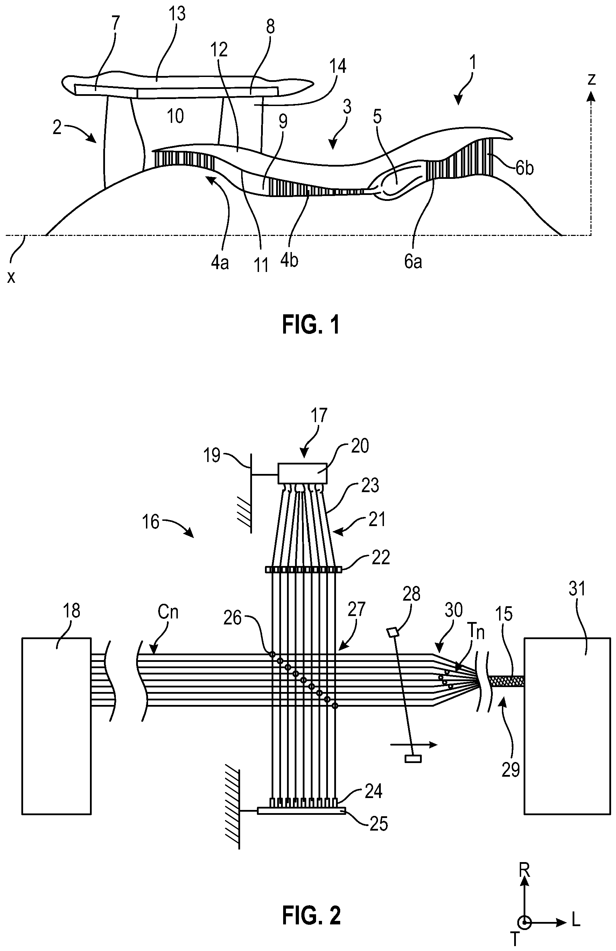

La figure 1 montre une vue en coupe axiale et partielle d'une turbomachine 1 d'axe longitudinal X qui comprend divers organes pouvant être réalisés en matériaux composites. L'invention s'intéresse tout particulièrement aux organes ou pièces de turbomachine qui présentent un axe de révolution tel(le)s que des carters de soufflante, des carters de compresseurs, des carters de turbine, etc.

La turbomachine de la figure 1 est une turbomachine double flux et double corps destinée à être montée sur un aéronef. La turbomachine 1 comprend une soufflante 2 qui est montée en amont d'un générateur de gaz 3 ou moteur suivant la circulation des gaz dans la turbomachine et ici suivant l'axe longitudinal X (et même de gauche à droite sur la figure 1). Le générateur de gaz comprend d'amont en aval, un compresseur basse pression 4a, un compresseur haute pression 4b, une chambre de combustion 5, une turbine haute pression 6a et une turbine basse pression 6b.

La soufflante 2 est entourée par un carter de soufflante 7 qui est prolongé en aval par une virole de carter intermédiaire (connue sous l'acronyme « VCI ») 8. Cette virole de carter intermédiaire est fixée sur le carter de soufflante 7. Cette virole 8 peut également être réalisée en matériau composite et ainsi entrer dans le cadre de l'invention. La virole de carter intermédiaire 8 est reliée à un carter inter-veine 12 de la turbomachine via plusieurs bras structuraux 14 agencés régulièrement autour de l'axe longitudinal. La virole de carter intermédiaire 8 supporte le carter de soufflante 7 et aussi une nacelle externe13. La nacelle 13 et le carter de soufflante 7 sont centrés sur l'axe longitudinal. La soufflante 2 divise l'air qui entre dans la turbomachine en un flux d'air primaire qui traverse le générateur de gaz 3 et en particulier dans une veine primaire 9, et en un flux d'air secondaire qui circule autour du générateur de gaz dans une veine secondaire 10. Le générateur de gaz est logé à l'intérieur d'un carter interne 11. Le carter inter-veine 12 entoure le carter interne 11. Le carter inter-veine 12 délimite la paroi radialement interne de la veine secondaire 10. Les veines primaire et secondaire 9, 10 sont concentriques. Ce carter inter-veine 12 et le carter interne 11 comprennent divers carters structuraux entourant les compresseurs et les turbines.

Au moins un des carters ou viroles de turbomachine est réalisé(e) par un procédé de fabrication de pièce en matériaux composite avec un renfort fibreux noyé dans une matrice. Le renfort fibreux est obtenu par un procédé de fabrication d'une préforme 15 (ou texture fibreuse ou tissu) réalisée dans un tissage tridimensionnel (ou tissage 3D) de fils. Dans la présente invention, nous entendons par l'expression «tissage tridimensionnel » ou « tissage 3D » un mode de tissage dans lequel des fils de chaîne sont liés à des fils de trames sur plusieurs couches. La préforme pourrait également être réalisée suivant un tissage interlock tridimensionnel ou « tissage interlock 3D ». Nous entendons par l'expression « tissage interlock 3D » un mode de tissage dans lequel plusieurs couches (formées de fils de chaine et de trame) sont liées entre elles. La préforme 15 peut être également obtenue avec un tissage bidimensionnel (ou tissage 2D).

Le tissage de la préforme 15 est réalisé au moyen d'une installation de tissage 16 comprenant un métier à tisser 17 configuré au tissage tridimensionnel et/ou bidimensionnel. Le renfort fibreux comprend une pluralité de fils de chaîne et une pluralité de fils de trame qui sont orientés respectivement dans des directions qui sont perpendiculaires. Le tissage est avantageusement réalisé à plat de sorte qu'en sortie du métier à tisser 17, la préforme 15 obtenue se présente également sous une forme générale d'une bande plate avec des épaisseurs qui varient.

Dans le présent exemple, les fils ou torons pour réaliser le tissage comprennent des fibres en carbone, en verre, en céramique, de silice, de carbure de silicium, en kevlar, en polyamide, d'alumine ou un mélange de ces fibres. De préférence, mais non limitativement, les fils sont en carbone.

Sur la figure 2 est représenté un exemple d'installation de tissage 16 qui s'étend suivant une direction longitudinal L, présente une hauteur suivant une direction radiale R et une largeur suivant une direction transversale T. Les directions sont perpendiculaires entre elles. L'installation de tissage 16 comprend un système d'alimentation 18 de fils destinés à servir de fil de chaîne Cn et qui sont stockés sur plusieurs bobines. Le système d'alimentation permet une meilleure distribution des fils de chaîne qui sont disposés suivant plusieurs couches et de manière superposée suivant la direction radiale R (de sorte à donner une épaisseur au tissu). Les fils de chaines sont disposés également suivant la direction transversale (de sorte à donner une largeur au tissu). Le métier à tisser 17 représenté est du type Jacquard et est disposé sur une première structure 19 qui s'étend suivant la direction radiale. Le métier à tisser 17 comprend en particulier une tête de métier 20 qui surmonte suivant la direction radiale un harnais 21 qui est constitué d'une planche d'empoutage 22 perforée et de plusieurs lisses 23 qui traversent la planche d'empoutage. La planche d'empoutage est agencée au-dessus des zones de connexion//tissage, suivant la direction verticale. Chaque lisse 23 est reliée d'une part, à une première extrémité à la tête de métier 20 et d'autre part, à une deuxième extrémité opposée à des ressorts de rappel 24 qui sont solidaires d'un cadre 25 de la première structure 19 du métier à tisser. Chaque lisse 23 se présente sous la forme d'une tige métallique et comprend au moins un œillet 26 qui est traversé par un fil de chaîne en provenance du système d'alimentation 18. De manière alternative, chaque lisse se compose d'un fil souple qui est accroché à une tige métallique comprenant l'œillet. Cette configuration permet aux lisses 23 de supporter les fils de chaîne Cn.

Au cours du tissage, le harnais 21 est mis en mouvement suivant la direction verticale et dans une zone de connexion 27 des fils de chaine et des lisses (avec les œillets) de manière à permettre l'introduction des fils de trame ultérieurement après l'ouverture de la foule. L'amplitude verticale des mouvements des lisses 23 détermine les différentes couches et épaisseurs de la préforme. Lors de la mise en mouvement du harnais 21 certaines lisses montent verticalement tandis que les autres descendent et inversement.

L'installation 16 comprend encore un peigne à tisser 28 qui est agencée suivant la direction d'avancement des fils de chaîne entre la zone de connexion 12 et une zone de tissage 29 où la préforme 15 est obtenue (les fils de trame et de chaines sont entrelacés). Au niveau du peigne 28 se trouve également une zone d'insertion 30 des fils de trame Tn (la foule) qui sont acheminés par une navette (non représentée). Les fils de trame Tn s'étendent dans cette zone d'insertion 30 suivant la direction transversale. Le peigne à tisser 28 comprend une pluralité de dents traversées chacune par les fils de chaine Cn. Typiquement, le peigne à tisser 28 est animé d'un mouvement d'amont en aval par rapport à la direction longitudinale permettant de tasser les fils de trame Tn qui entrelacent les fils de chaine Cn sur la préforme 15 déjà tissée dans la zone de tissage 29.

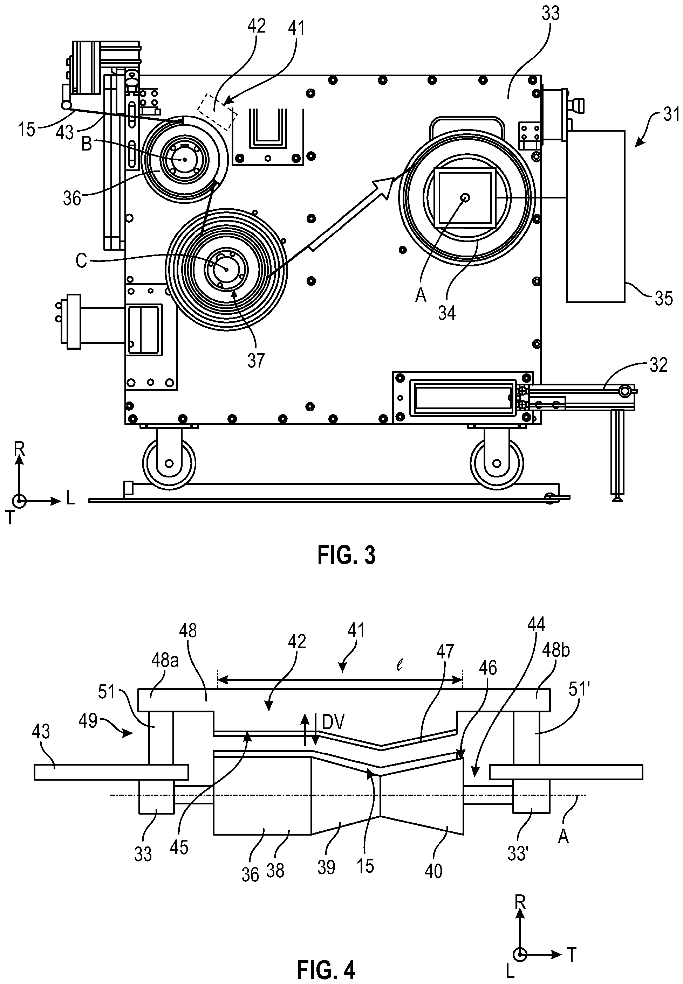

Sur la figure 3 est représentée une coupe axiale d'une autre partie de l'installation de tissage 16 où la préforme 15 qui a été tissée préalablement sous forme d'une bande de tissus est enroulée sur un rouleau de stockage 34. Cette autre partie est une unité de stockage 31 qui est située en aval de la zone de tissage. L'unité de stockage 31 comprend une deuxième structure 32 avec une première cloison 33 et une deuxième cloison 33' (cf. figure 4) qui sont opposées suivant la direction transversale. Le rouleau de stockage 34 est monté sur la deuxième structure 32 et s'étend transversalement entre les première et deuxième cloisons 33, 33'. Le rouleau de stockage 34 est également mobile en rotation autour d'un premier axe de rotation A et suivant un premier sens de rotation. Ce premier axe de rotation A est perpendiculaire à la direction longitudinale L (suivant le référentiel indiqué sur la figure 3). Pendant le tissage, la préforme 15 s'enroule sur ce rouleau de stockage 34 qui applique une tension sur celle-ci. Pour cela, le rouleau de stockage est relié à un moteur (non représenté) qui est piloté par un système électronique de commande 35. Le rouleau de stockage applique une tension comprise entre 1500 et 4500 Newton. Le moteur délivre un couple qui entraîne le rouleau de stockage 34 en rotation et qui permet d'appliquer la tension sur la préforme qui est couplé au rouleau de stockage 34. La vitesse angulaire du rouleau de stockage 34 est discontinue (le rouleau 34 avance par à-coups). En particulier, pour un tissage 2D, le rouleau 34 avance par incrémentation à chaque insertion d'un fil de trame et potentiellement de manière constante. Pour un tissage multicouche, le rouleau 34 s'arrête le temps que l'on insère la totalité des fils de trame de la colonne (pour qu'ils soient bien les uns au-dessus des autres) et avance d'un incrément ensuite pour l'insertion de n fils de trames de la colonne suivante.

L'installation 16 est également reliée au système électronique de commande qui commande l'arrêt et la mise en marche de celle-ci.

Au moins un premier rouleau d'appel 36 dénommé « puller » en anglais est situé en amont du rouleau de stockage 34 de manière d'une part, à entraîner la préforme (la faire avancer) et d'autre part, à guider la préforme vers le rouleau de stockage et de mieux répartir la tension du rouleau de stockage 34. Le premier rouleau d'appel 36 est agencé en aval du métier à tisser. Dans le présent exemple, le premier rouleau d'appel 36 est porté par la deuxième structure 32 comme cela est visible sur la figure 3 et s'étend transversalement entre la première et la deuxième cloison 33, 33'. De manière alternative (non représentée), le premier rouleau d'appel 36 est monté sur la première structure 19.

Le premier rouleau d'appel 36 est également entraîné en rotation via un moteur autour d'un deuxième axe de rotation B. Le deuxième axe de rotation B est parallèle au premier axe de rotation A. Le rouleau 36 est, en particulier, entraîné à une vitesse déterminée (la vitesse détermine les mailles de trame). Ensuite, le rouleau de stockage 34 est piloté en tension (application directe ou asservissement avec une boucle de retour grâce à une mesure de tension sur des rouleaux intermédiaires décrits ci-après). La tension appliquée par le rouleau de stockage 34 permet de plaquer la préforme sur le premier rouleau d'appel 36. Le premier rouleau d'appel 36 présente encore un coefficient de friction suffisant pour permettre une adhérence adéquate avec la préforme. Avantageusement, le rouleau d'appel 36 est équipé d'un revêtement à fort coefficient de frottement pour mieux tirer le tissu. Son sens de déplacement est avantageusement identique à celui du rouleau de stockage 34. Suivant un autre exemple de réalisation, le rouleau d'appel 36 peur tourner en sens inverse du rouleau de stockage 34. Dans ce cas de réalisation, par exemple, la préforme peut passer sous le rouleau de stockage pour être enroulée.

Au moins un deuxième rouleau 37 d'appel dénommé « reverser » en anglais est également monté mobile en rotation sur la deuxième structure 32 suivant un troisième axe de rotation C, lequel est parallèle à l'axe B. Plusieurs deuxièmes rouleaux d'appel 37 (dits rouleaux intermédiaires) peuvent être installés entre le rouleau d'appel 36 et le rouleau de stockage 34. Chaque deuxième rouleau 37 permet une application homogène de la tension. En effet, la préforme peut présenter une longueur différente entre chaque deuxième rouleau (préforme tissée « en forme » grâce au procédé de « contour weaving » - c'est-à-dire que la préforme est non développable) ce qui implique un ajustement de la longueur parcourue par la préforme entre le premier rouleau d'appel 36 et le rouleau de stockage 34. De la sorte, grâce au(x) deuxième(s) rouleau(x) d'appel (intermédiaire(s)) la longueur de la préforme est différente à chaque position axiale d'un deuxième rouleau. En l'absence de ce ou ces deuxième(s) rouleau(x) 37, la tension appliquée par le rouleau de stockage 34 peut se concentrer dans une zone où la préforme est la plus courte et générer des glissements.

En référence à la figure 3, le deuxième rouleau 37 est monté libre en rotation (contrairement au rouleau d'appel 36 et au rouleau de stockage 34). En particulier, le deuxième rouleau 37 est situé suivant la direction longitudinale L entre le premier rouleau 36 et le rouleau de stockage 34. Ce deuxième rouleau est également situé à une hauteur radiale différente de celle du premier rouleau 36 et de celle du rouleau de stockage 34. Elle peut être inférieure ou supérieure selon les besoins.

La figure 4 montre plus en détail le premier rouleau d'appel 36. Ce dernier présente ici une section axiale de forme générale en sablier. Le premier rouleau 36 peut présenter tous types de formes avec différentes portions curvilignes, coniques ou tronconiques plus ou moins prononcées. En d'autres termes, la forme du premier rouleau 36 est dite évolutive. Typiquement, la forme de la section axiale du rouleau correspond au profil du carter ou de la virole à fabriquer. Sur l'exemple représenté très schématiquement de la figure 4, le premier rouleau d'appel présente une première partie 38 cylindrique centrée sur l'axe A et une deuxième partie 39 conique ou tronconique qui prolonge la première partie, la base de la deuxième partie étant reliée à la première partie. Le premier rouleau comprend encore une troisième partie 40 conique ou tronconique dont le sommet est relié à celui de la deuxième partie. De manière alternative, la deuxième partie est cylindrique et les première et troisième parties qui s'étendent transversalement de part et d'autre du deuxième rouleau sont de forme tronconique. Le premier rouleau d'appel 36 est fabriqué d'une seule pièce (venue de matière ou monobloc). Alternativement, le premier rouleau d'appel 36 est fabriqué à l'aide de plusieurs parties qui sont assemblées avec des moyens de fixation adéquats (soudure, vis, boulons, goujons, etc.).

L'installation 16 comprend un élément d'immobilisation 41 de la préforme sur le premier rouleau d'appel 36 lorsque l'installation est à l'arrêt (notamment des arrêts prolongés). Cet élément d'immobilisation 41 empêche le glissement de la préforme en amont (vers la zone de tissage 29) ou en aval du premier rouleau 36 (vers le rouleau de stockage 34) du fait d'une baisse de tension d'un des deux côtés du premier rouleau 36 (soit du côté du rouleau de stockage 34, soit du côté de masselottes qui se trouvent sur les bobines montées dans le système d'alimentation 18). La tension du côté du rouleau de stockage intervient du fait que celui-ci tire la préforme vers l'aval. En amont il y a également une tension résistante due aux poids des bobines et des masselottes, et des frottements des fils sur les différentes parties de l'installation (œillet, peigne, etc.).

Dans le présent exemple, l'élément d'immobilisation 41 comprend une cale ou une bride 42 qui est montée à proximité du premier rouleau d'appel 36. Avantageusement, la bride 42 est agencée au niveau d'une table de support 43 de la préforme 15 en sortie du métier à tisser. En particulier, comme cela est visible sur la figure 4, un espace 44 est ménagé dans la table de support 43 pour y recevoir au moins en partie le premier rouleau 36. La préforme est supportée par le premier rouleau d'appel 36 au niveau de cet espace 44. De manière alternative, la bride peut être placée à un autre endroit de la deuxième structure. La bride ne doit pas empêcher la rotation du premier rouleau lors du fonctionnement de l'installation.

La bride 42 présente une surface d'appui 45 qui présente une forme complémentaire à une surface périphérique 46 du premier rouleau 36. Dans le présent exemple, la surface d'appui 45 est destinée à s'adapter à la forme du premier rouleau et/ou à la préforme. La surface d'appui 46 est en d'autres termes agencée en regard du rouleau 36 (avec la préforme). Dans cet exemple, la bride 42 comprend également un organe de support 48 qui porte la surface d'appui 45. De manière avantageuse, la bride 42 est réalisée dans un matériau métallique. Un exemple de matériau métallique envisagé est l'aluminium qui est léger et économique. Celle-ci présente une épaisseur de l'ordre de 5 cm de manière à avoir une rigidité suffisante. La bride présente en outre une largeur l suivant la direction transversale (par rapport au référentiel de la figure 4) comprise entre 70 cm et 190 cm. En particulier, la bride présente une largeur sensiblement identique à celle du premier rouleau 36.

Suivant l'exemple représenté sur la figure 4, la surface d'appui 45 comprend un revêtement 47 qui permet de respecter l'intégrité physique de la préforme et de mieux répartir la pression de la bride 42 appliquée sur la préforme 15 ou le premier rouleau 36. Le revêtement 47 est réalisé dans un matériau polymère tel qu'un élastomère (néoprène, silicone). Ce revêtement 47 peut permettre à la surface d'appui 45 de s'adapter à la forme et/ou à l'épaisseur de la préforme qui défile sur le premier rouleau d'appel 36.

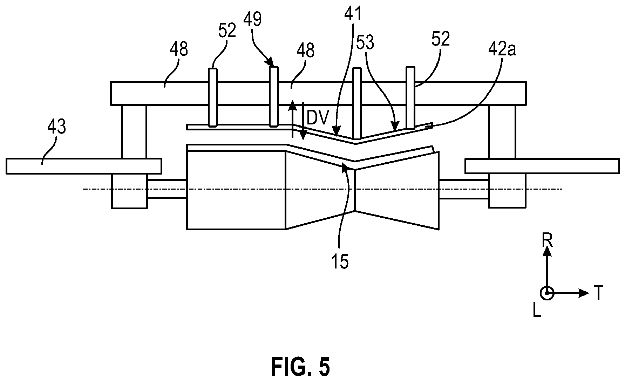

De manière alternative telle que représentée sur la figure 5, la bride 42 comprend un organe mobile 42a qui porte la surface d'appui 45. En particulier, l'organe mobile se présente sous la forme d'une tôle métallique flexible 42a (très mince) de sorte à s'adapter à la forme du rouleau 36 et/ou de la préforme 15. Le matériau métallique est par exemple de l'aluminium ou de l'acier. La tôle 42a est maintenue par l'organe de support 48 qui se présente ici sous la forme d'une barre transversale (suivant la direction transversale T), rigide. L'organe de support 48 est réalisé dans un matériau métallique. La tôle 42a, quant à celle-ci, s'étend principalement suivant la direction transversale T.

Dans une autre variante non représentée, pour que la surface d'appui s'adapte à la forme du premier rouleau et/ou à la préforme, la bride comprend un organe souple. L'organe souple est formé par une vessie souple qui est montée sur l'organe de support. La vessie est disposée suivant la direction radiale entre l'organe de support 48 rigide et la préforme. La vessie forme une chambre fermée et qui est destinée à être gonflée (pour emplir son volume) par un fluide. La vessie est maintenue sous pression par le fluide à l'intérieur de celle-ci ou par un système de mise sous pression externe relié à la vessie. La vessie est également réalisée dans un matériau polymère tel qu'un silicone.

Lors de l'arrêt du métier à tisser, voire de l'installation, l'opérateur dispose la bride sur le premier rouleau de sorte qu'une portion de la préforme soit compressée ou comprimée entre le premier rouleau d'appel 36 et la bride 42. A cet effet, des organes de fixation 50 tels que des vis, goujons, écrous sont utilisés pour fixer la bride en position sur la deuxième structure et/ou en particulier ici sur la table de support 43.

Suivant un autre mode de réalisation, la bride 42 comprend au moins une partie qui est montée mobile par rapport au premier rouleau 36. De manière avantageuse, mais non limitativement, au moins une partie de la bride se déplace sensiblement suivant une direction orthogonale au sens de déplacement de la préforme. Pour cela, et comme cela est visible sur la figure 4, la bride est équipée d'un organe de mise en déplacement 49 qui est fixé sur la deuxième structure. Cet organe de mise en déplacement comprend un premier vérin 51 qui est relié à une première extrémité 48a de l'organe de support 48 de la bride et un deuxième vérin 51' qui est relié à une deuxième extrémité 48a de la bride. Les premier et deuxième vérins 51, 51' opèrent suivant une translation verticale suivant la direction radiale. Les vérins sont pilotés par le système électronique de commande 35. De la sorte, lorsqu'une information d'arrêt de l'installation est reçue par le système électronique de commande, celui-ci envoie un ordre de commande à l'organe de mise en déplacement 49 de la bride pour déplacer la bride vers le premier rouleau d'appel 36. De la sorte, la préforme 15 est compressée entre le premier rouleau d'appel 36 et la bride 42.

Dans l'exemple de réalisation de la figure 5, un organe de mise en déplacement d'au moins une partie de la bride 42 est également prévu. Dans ce cas, le déplacement est manuel suivant une translation verticale (suivant la direction radiale) comme représenté par les flèches DV. La tôle métallique flexible 42a est amovible et mobile par rapport à l'organe de support 48 et aussi par rapport au rouleau 36. Pour cela, l'organe de mise en déplacement 49 comprend des vis de réglage 52 qui sont reçues chacune dans un alésage de l'organe de support 48. Ici, les alésages comprennent un filet interne. En vissant chaque vis de réglage 52 dans leurs alésages, leurs extrémités libres viennent en butée contre une surface externe 53 de la tôle 42a (opposée radialement à la surface d'appui 45 portée ici par la tôle). Suivant une alternative de cet exemple de réalisation, l'organe de mise en déplacement comprend des tiges de réglage qui sont solidaires de la surface externe de la tôle et qui sont destinées à traverser chacune un alésage de l'organe de support. Un écrou est monté du côté des extrémités libres des tiges pour fixer la position de la tôle sur la préforme 15.

Dans le cas de la figure 5, au moins la tôle métallique 42a est rapportée et amovible. Celle-ci est mise en place de préférence manuellement. La patte 54 vient ensuite plaquer la bride sur la préforme.

Suivant encore un autre mode de réalisation, au moins une partie de la bride se déplace suivant une rotation dont l'axe de rotation est orthogonal au sens de déplacement de la préforme. A cet effet, chaque première et deuxième extrémité de la bride ou de l'organe mobile (ou organe souple (tôle métallique)) est reliée à un bras qui est monté en rotation suivant un axe parallèle à l'axe du premier rouleau. Les bras sont montés pivotants sur la deuxième structure (ou la table de support). Les bras sont pilotés par le système électronique de commande pour les déplacer vers le premier rouleau lorsque celui-ci reçoit une information d'arrêt de l'installation. Le mouvement de rotation du bras permettrait une plus grande amplitude de mouvement et un meilleur dégagement de la zone comprenant l'espace 44 lorsque la bride 42 n'est pas utilisée.

Suivante une variante de ce mode de réalisation, c'est l'opérateur qui abaisse la bride manuellement vers le premier rouleau lorsque l'installation est à l'arrêt.

La bride peut appliquer une pression de compression ou compaction sur le premier rouleau d'appel qui est comprise entre 0.1 Mpa et 2 Mpa.

Une fois que la préforme est obtenue, celle-ci est découpée (chute de fin de tissage) puis déroulée du rouleau de stockage 34.

Le procédé de fabrication de la pièce de turbomachine comprend en outre une étape de mise en place de la préforme autour d'un mandrin qui présente la forme du carter de turbomachine. Ce mandrin présente un axe de révolution et forme le moule d'injection dans lequel sera injectée la résine destinée à densifier la préforme et obtenir la pièce souhaitée. Le moule d'injection présente une géométrie identique à celle de la pièce finale. Après enroulement autour du moule d'injection, la préforme est découpée à la bonne longueur pour remplir une partie de la chambre d'injection. Un contre moule est appliqué autour de la préforme pour former la chambre d'injection.

Le procédé comprend une étape d'injection d'une matrice selon la technologie RTM, cet acronyme signifiant en anglais Resin Transfert Moulding pour moulage par transfert de résine. Dans la présente description, les termes « résine » et « matrice » sont équivalents. La matrice permettant une densification du renfort fibreux peut être une matrice polymérique telle qu'une résine thermodurcissable à base d'époxy. La matrice polymérique peut encore être une résine thermoplastique. L'imprégnation de la préforme par la résine est optimisée en appliquant une pression dans la chambre d'injection. D'autres procédés tels que l'infusion, le moulage par transfert de résine connu sous l'acronyme anglais « RTM light » ou le moulage par injection d'une résine entre la préforme et une membrane flexible connu sous terme « Polyflex » sont bien entendu envisageables.

Nous obtenons une pièce rigide après un durcissement ou polymérisation de la matrice et sans resserrement ou relâchement excessifs des mailles dans le renfort fibreux. La pièce finale en matériau composite est ensuite démoulée. Eventuellement, des opérations d'usinage et de perçage du carter obtenu sont réalisées en fin de procédé.

## Revendications

1. Procédé de fabrication d'une préforme (15) d'une pièce de turbomachine avec une installation de tissage (16) comprenant au moins un premier rouleau d'appel (36) et un rouleau de stockage (34), le procédé comprenant les étapes suivantes :
- alimentation de l'installation à tisser avec des fils de trame (Tn) et de chaîne (Cn),
- tissage des fils de trame et de chaîne de manière à former la préforme (15),
- entraînement de la préforme (15) suivant un sens de déplacement vers le rouleau de stockage (34) qui applique une tension prédéterminée sur la préforme (15), et
- enroulement et stockage de la préforme (15) autour du rouleau de stockage (34), **caractérisé en ce qu'**il comprend une étape d'immobilisation de la préforme (15) sur le premier rouleau d'appel (36) disposé en amont du rouleau de stockage (34) suivant le sens de déplacement de la préforme (15) lors de l'arrêt de l'installation.

2. Procédé de fabrication selon la revendication précédente, **caractérisé en ce que** l'étape d'immobilisation est réalisée au moyen d'une bride (42) agencée à proximité du premier rouleau d'appel (36).

3. Procédé de fabrication selon la revendication précédente, **caractérisé en ce qu'**au moins une partie de la bride (42) se déplace vers le premier rouleau d'appel (36) de sorte que la préforme (15) soit compressée entre le premier rouleau et la bride.

4. Procédé de fabrication selon la revendication précédente, **caractérisé en ce que** le déplacement d'au moins la partie mobile de la bride (42) est manuel ou motorisé.

5. Procédé de fabrication selon la revendication 3 ou 4, **caractérisé en ce que** l'installation est reliée à un système électronique de commande (35) configurée pour commander l'arrêt et la mise en marche de l'installation (16), le système électronique de commande (35) étant relié à un organe de mise en déplacement (49) de la bride (42) de sorte que lorsqu'il reçoit une information d'arrêt de l'installation, un ordre de commande est envoyé à l'organe de mise en déplacement (49).

6. Procédé de fabrication selon l'une quelconque des revendications précédentes, **caractérisé en ce que** la bride (42) applique une pression sur le premier rouleau d'appel (36) comprise entre 0,1 Mpa et 2 Mpa.

7. Installation de tissage (16) pour la fabrication d'une préforme (15) d'une pièce de turbomachine, l'installation de tissage (16) comprenant :
- une structure (32, 33, 43) fixe,
- au moins un rouleau de stockage (34) de la préforme (15) monté en rotation autour d'un premier axe de rotation (A) par rapport à la structure, le rouleau de stockage (34) étant destiné à appliquer une tension sur la préforme (15) qui est destinée à être entrainée suivant un sens de déplacement vers le rouleau de stockage (34) et à s'enrouler autour de celui-ci,
- au moins un premier rouleau (36) d'appel monté en amont du rouleau de stockage (34) et mobile en rotation autour d'un deuxième axe de rotation (B) par rapport à la structure, et,
- une bride (42) configurée de manière à immobiliser la préforme (15) sur le premier rouleau d'appel (36) lors de l'arrêt de l'installation.

8. Installation de tissage (16) selon la revendication précédente, caractérisée ce qu'au moins une partie de la bride (42) est mobile par rapport au premier rouleau d'appel (36) via au moins un organe de mise en déplacement (49) qui est fixé sur la structure (32, 33, 43) et qui est relié à la bride (42).

9. Installation de tissage (16) selon l'une des revendications 7 et 8, **caractérisée en ce que** la bride (42) comprend une surface d'appui (45) orientée vers le premier rouleau d'appel (36) et qui présente une forme complémentaire avec une surface périphérique (46) du premier rouleau d'appel (36) ou de la préforme (15).

10. Installation de tissage (16) selon l'une des revendications 7 à 9, **caractérisée en ce que** la bride (42) comprend un organe de support (48) et un organe mobile (42a) ou un organe souple par rapport à l'organe de support (48), l'organe mobile ou souple portant la surface d'appui (45).

11. Installation de tissage (16) selon la revendication précédente, **caractérisée en ce que** la surface d'appui (45) comprend un revêtement (47) réalisé dans un matériau polymère.

12. Procédé de fabrication d'une pièce de turbomachine en matériau composite comprenant un renfort fibreux densifié par une matrice, le procédé comprenant les étapes suivante :
- fabrication d'une préforme selon le procédé de l'une quelconque des revendications 1 à 6,
- mise en place de la préforme autour d'un mandrin formant un moule,
- installation d'un contre moule autour de la préforme mise en place sur le mandrin de manière à former une chambre d'injection,
- injection d'une matrice dans la chambre d'injection,
- polymérisation de la matrice,
- démoulage de la pièce en matériau composite.

## Patentansprüche

1. Herstellungsverfahren für eine Vorform (15) eines Turbotriebwerkstücks mit einer Webanlage (16), die mindestens eine erste Aufnahmerolle (36) und eine Vorratsrolle (34) umfasst, wobei das Verfahren die folgenden Schritte umfasst:
- Versorgen der Anlage zum Weben mit Schuss- (Tn) und Kettfäden (Cn),
- Weben der Schuss- und Kettfäden auf eine Weise, um die Vorform (15) zu bilden,
- Antreiben der Vorform (15) entlang einer Laufrichtung in Richtung der Vorratsrolle (34), die eine vorbestimmte Spannung auf die Vorform (15) aufbringt, und
- Aufrollen der Vorform (15) um die Vorratsrolle (34) herum und Aufbewahrung davon, **dadurch gekennzeichnet, dass** es einen Immobilisierungsschritt der Vorform (15) auf der ersten Aufnahmerolle (36) umfasst, die der Vorratsrolle (34) entlang der Laufrichtung der Vorform (15) vorgelagert angeordnet ist, wenn die Anlage stoppt.

2. Verfahren nach dem vorstehenden Anspruch, **dadurch gekennzeichnet, dass** der Immobilisierungsschritt mittels eines Flansches (42) durchgeführt wird, der in der Nähe der ersten Aufnahmerolle (36) angebracht ist.

3. Verfahren nach dem vorstehenden Anspruch, **dadurch gekennzeichnet, dass** mindestens ein Teil des Flansches (42) sich derart in Richtung der ersten Aufnahmerolle (36) verschiebt, dass die Vorform (15) zwischen der ersten Rolle und dem Flansch komprimiert wird.

4. Verfahren nach dem vorstehenden Anspruch, **dadurch gekennzeichnet, dass** die Verschiebung von mindestens dem beweglichen Teil des Flansches (42) von Hand oder motorisiert erfolgt.

5. Herstellungsverfahren nach Anspruch 3 oder 4, **dadurch gekennzeichnet, dass** die Anlage mit einem elektronischen Steuerungssystem (35) verbunden ist, das zum Steuern des Stopps und der Inbetriebnahme der Anlage (16) konfiguriert ist, wobei das elektronische Steuerungssystem (35) mit einem Element zum Verschieben (49) des Flansches (42) derart verbunden ist, dass, wenn es Informationen zum Stopp der Anlage empfängt, ein Steuerbefehl an das Element zum Verschieben (49) gesendet wird.

6. Herstellungsverfahren nach einem der vorstehenden Ansprüche, **dadurch gekennzeichnet, dass** der Flansch (42) einen Druck zwischen 0,1 MPa und 2 MPa auf die erste Aufnahmerolle (36) aufbringt.

7. Webanlage (16) zur Herstellung einer Vorform (15) eines Turbotriebwerkstücks, wobei die Webanlage (16) umfasst:
- eine feste Struktur (32, 33, 43),
- mindestens eine Vorratsrolle (34) der Vorform (15), die bezüglich der Struktur drehbar um eine erste Drehachse (A) herum montiert ist, wobei die Vorratsrolle (34) dazu bestimmt ist, eine Spannung auf die Vorform (15) aufzubringen, die dazu bestimmt ist, entlang einer Verschiebungsrichtung in Richtung der Vorratsrolle (34) angetrieben zu werden und um sich um diese herumzuwickeln,
- mindestens eine erste Aufnahmerolle (36), die der Vorratsrolle (34) vorgelagert und bezüglich der Struktur drehbeweglich um eine zweite Drehachse (B) montiert ist, und
- einen Flansch (42), der auf eine Weise konfiguriert ist, um die Vorform (15) auf der ersten Aufnahmerolle (36) zu immobilisieren, wenn die Anlage stoppt.

8. Webanlage (16) nach dem vorstehenden Anspruch, **dadurch gekennzeichnet, dass** mindestens ein Teil des Flansches (42) bezüglich der ersten Aufnahmerolle (36) mittels mindestens eines Verschiebungselements (49) beweglich ist, das auf der Struktur (32, 33, 43) befestigt ist und das mit dem Flansch (42) verbunden ist.

9. Webanlage (16) nach einem der Ansprüche 7 und 8, **dadurch gekennzeichnet, dass** der Flansch (42) eine Auflageoberfläche (45) umfasst, die in Richtung der ersten Aufnahmerolle (36) orientiert ist und die eine mit einer peripheren Oberfläche (46) der ersten Aufnahmerolle (36) oder der Vorform (15) komplementäre Form aufweist.

10. Webanlage (16) nach einem der Ansprüche 7 bis 9, **dadurch gekennzeichnet, dass** der Flansch (42) ein Stützelement (48) und ein bewegliches Element (42a) oder ein bezüglich des Stützelements (48) nachgiebiges Element umfasst, wobei das bewegliche oder nachgiebige Element die Auflageoberfläche (45) trägt.

11. Webanlage (16) nach dem vorstehenden Anspruch, **dadurch gekennzeichnet, dass** die Auflageoberfläche (45) eine Beschichtung (47) umfasst, die aus einem Polymermaterial ausgeführt ist.

12. Herstellungsverfahren eines Turbotriebwerkstücks aus Kompositmaterial, umfassend eine durch eine Matrix verdichtete faserige Verstärkung, wobei das Verfahren die folgenden Schritte umfasst:
- Herstellung einer Vorform nach dem Verfahren eines der Ansprüche 1 bis 6,
- Platzieren der Vorform um einen Dorn herum, wodurch eine Form gebildet wird,
- Installation einer Gegenform um die Vorform herum, die derart auf dem Dorn platziert ist, um eine Injektionskammer zu bilden,
- Injektion einer Matrix in die Injektionskammer,
- Polymerisation der Matrix,
- Entformung des Stücks aus Kompositmaterial.

## Claims

1. A method for manufacturing a preform (15) for a turbomachine component using a weaving installation (16) comprising at least a first delivery roll (36) and a take-up roll (34), the method comprising the following steps:
- feeding the weaving installation with weft (Tn) and warp (Cn) filaments,
- weaving the weft and warp filaments together to form the preform (15),
- driving the preform (15) in a direction of travel towards the take-up roll (34) which applies a predetermined tension on the preform (15), and
- winding and storing the preform (15) around the take-up roll (34), **characterised in that** it comprises a step of immobilising the preform (15) on the first delivery roll (36) arranged upstream of the take-up roll (34) in the direction of travel of the preform (15) when the installation is stopped.

2. The manufacturing method according to the preceding claim, **characterised in that** the immobilisation step is carried out by means of a flange (42) arranged close to the first delivery roll (36).

3. The manufacturing method according to the preceding claim, **characterised in that** at least one portion of the flange (42) moves towards the first delivery roll (36) so that the preform (15) is compressed between the first roll and the flange.

4. The manufacturing method according to the preceding claim, **characterised in that** the movement of at least the movable portion of the flange (42) is manual or motorised.

5. The manufacturing method according to claim 3 or 4, **characterised in that** the installation is connected to an electronic control system (35) configured to control the stopping and the starting of the installation (16), the electronic control system (35) being connected to a moving member (49) for setting in motion the flange (42) so that when it receives an information about stopping the installation, a control command is sent to the moving member (49).

6. The manufacturing method according to any one of the preceding claims, **characterised in that** the flange (42) applies a pressure to the first delivery roll (36) of between 0.1 Mpa and 2 Mpa.

7. A weaving installation (16) for manufacturing a preform (15) for a turbomachine component, the weaving installation (16) comprising:
- a stationary structure (32, 33, 43),
- at least one take-up roll (34) for the preform (15) mounted so as to rotate about a first axis of rotation (A) with respect to the structure, the take-up roll (34) being intended to apply a tension to the preform (15) which is intended to be driven in a direction of movement towards the take-up roll (34) and to be wound around the latter,
- at least one first delivery roll (36) mounted upstream of the take-up roll (34) and movable in rotation about a second axis of rotation (B) relative to the structure, and,
- a flange (42) configured so as to immobilise the preform (15) on the first delivery roll (36) when the installation stops.

8. The weaving installation (16) according to the preceding claim, **characterised in that** at least a portion of the flange (42) is movable relative to the first delivery roll (36) via at least one moving member (49) which is attached to the structure (32, 33, 43) and which is connected to the flange (42).

9. The weaving installation (16) according to one of claims 7 and 8, **characterised in that** the flange (42) comprises a bearing surface (45) oriented towards the first delivery roll (36) and which has a complementary shape with a peripheral surface (46) of the first delivery roll (36) or of the preform (15).

10. The weaving installation (16) according to one of claims 7 to 9, **characterised in that** the flange (42) comprises a support member (48) and a movable member (42a) or flexible member relative to the support member (48), the movable or flexible member carrying the bearing surface (45).

11. The weaving installation (16) according to the preceding claim, **characterised in that** the bearing surface (45) comprises a coating (47) made of a polymeric material.

12. A method for manufacturing a turbomachine component of composite material comprising a fibrous reinforcement densified by a matrix, the method comprising the following steps:
- manufacturing a preform according to the method of any one of claims 1 to 6,
- placing the preform around a mandrel forming a mould,
- installing a counter-mould around the preform placed on the mandrel so as to form an injection chamber,
- injecting a matrix into the injection chamber,
- polymerising the matrix,
- demoulding the composite material component.
